# EUROPÄISCHE PATENTSCHRIFT

(11) **EP 1 975 467 B1**
(45) Veröffentlichungstag und Bekanntmachung des Hinweises auf die Patenterteilung: **19.09.2012**
(21) Anmeldenummer: 08004831.7
(22) Anmeldetag: 14.03.2008
(51) Int. Cl.: F16H 45/02

(54) **Hydrodynamische Kopplungsvorrichtung**
Hydrodynamic coupling device
Dispositif d'embrayage hydrodynamique

(30) Priorität: 26.03.2007 DE 102007014312
(43) Veröffentlichungstag der Anmeldung: 01.10.2008
(73) Patentinhaber: ZF Friedrichshafen AG, 88038 Friedrichshafen (DE)
(72) Erfinder: Frey, Peter, 97447 Gerolzhofen (DE); Baumann, Roland, 97456 Dittelbrunn (DE); Greulich, Michael, Dr., 97525 Schwebheim (DE); Mencher, Georg, 97506 Grafenrheinfeld (DE); Reinhardt, Bernd, 97453 Schonungen/Forst (DE); Hammer, Peter, 97421 Schweinfurt (DE); Rediger, Patrick, 97421 Schweinfurt (DE)

(56) Entgegenhaltungen:
- EP-B1- 1 977 141
- DE-A1- 19 754 652
- DE-A1-102007 058 014
- JP-A- 3 260 463
- JP-A- 2001 116 110

## Beschreibung

Die Erfindung betrifft eine hydrodynamische Kopplungsvorrichtung gemäß dem Oberbegriff des Anspruches 1.

Aus der JP 2001 116110 A ist eine hydrodynamische Kopplungsvorrichtung bekannt, bei der in einem Kupplungsgehäuse ein hydrodynamischer Kreis, gebildet durch ein Pumpenrad, ein Turbinenrad und ein Leitrad, sowie eine Überbrückungskupplung vorgesehen sind, die einen mit einer antriebsseitigen Gehäusewandung des Kupplungsgehäuses verbindbaren, in Achsrichtung zu einer Auslenkbewegung befähigten Kolben aufweist. Das Turbinenrad ist an einer Nabe befestigt, die mit einem abtriebsseitigen Bauteil eines Torsionsschwingungsdämpfers drehverbunden ist, und sich einerseits an einem Freilauf des Leitrades und andererseits an der antriebsseitigen Gehäusewandung des Kupplungsgehäuses axial abstützt. Die Nabe verfügt zur Passage von Strömungsfluid über erste und zweite Strömungsdurchlässe, die mit Axialversatz zueinander ausgebildet sind, wobei die ersten Strömungsdurchlässe einen ersten abtriebsseitigen Strömungsweg mit einem Druckraum verbinden, der durch die antriebsseitige Gehäusewandung des Kupplungsgehäuses und den Kolben begrenzt ist, während die zweiten Strömungsdurchlässe einen zweiten abtriebsseitigen Strömungsweg mit einem Bereich verbinden, der an die vom Druckraum abgewandte Seite des Kolbens angrenzt. Bauteile der Überbrückungskupplung sowie des Torsionsschwingungsdämpfers können eine zumindest partielle Abtrennung dieses Bereichs vom hydrodynamischen Kreis bewirken.

Die antriebsseitige Gehäusewandung ist zur Bildung einer Axialabstützung für die Nabe bis an eine Drehachse des Kupplungsgehäuses nach radial innen gezogen. Die Nabe kommt mit ihrem der antriebsseitigen Gehäusewandung zugewandten, als Axiallagerungsbereich ausgebildeten antriebsseitigen Ende in Axialanlage an einer Axiallagerung, die der antriebsseitigen Gehäusewandung zugeordnet ist. Die Axialanlagefläche greift hierzu in eine Axialausnehmung der antriebsseitigen Gehäusewandung ein.

Sofern die Trennung des zwischen dem Kolben und dem Torsionsschwingungsdämpfer angeordneten Bereichs vom hydrodynamischen Kreis zugunsten besserer Ansteuerbarkeit und Kühlbarkeit des Kolbens vorgenommen worden sein sollte, macht sich das erhebliche Volumen dieses Bereiches nachteilig bemerkbar, das sich aufgrund eines beträchtlichen axialen Abstandes der Bauteile von Überbrückungskupplung und Torsionsschwingungsdämpfer gegenüber dem Kolben ergibt. Dieses erhebliche Volumen erfordert nämlich eine relativ hohe Zeitspanne für den Aufbau des zur Ansteuerung des Kolbens benötigten Überdruckes gegenüber dem Druckraum, und_lässt zudem eine großräumige Verteilung des Druckmittels zu, so dass dieses nicht konzentriert an Reibflächen der Überbrückungskupplung zur Verfügung steht, wo es zur Wärmeabführung dringend benötigt würde.

Darüber hinaus ist der Aufwand zur Abdichtung des vorgenannten Bereiches gegenüber dem Druckraum beträchtlich, da die Nabe durch ein radiales Zwischenelement von dem Kolben getrennt ist, und sowohl die Nabe als auch der Kolben jeweils gegenüber diesem radialen Zwischenelement abgedichtet ist. Andererseits fehlt eine zwischen der Nabe und einem Abtrieb wirksame Abdichtung, die eine Trennung der beiden zuvor erläuterten abtriebsseitigen Strömungswege gegeneinander bewirken würde.

Eine weitere hydrodynamische Kopplungsvorrichtung ist aus der JP 3 260463 A bekannt. Dort sind in sehr deutlicher Weise Strömungswege zur Versorgung der hydrodynamischen Kopplungsvorrichtung mit Druckmittel dargestellt, von denen ein erster Strömungsweg zu einem Druckraum führt, der sich axial zwischen einer antriebsseitigen Gehäusewandung eines Kupplungsgehäuses und einem Kolben einer Überbrückungskupplung befindet, während ein zweiter und ein dritter Strömungsweg zu einem hydrodynamischen Bereich führt, gebildet durch Pumpenrad, Turbinenrad und Leitrad. Zum Schließen der Überbrückungskupplung ist ein Überdruck im hydrodynamischen Kreis gegenüber dem Druckraum erforderlich, wobei der Aufbau dieses Überdruckes aufgrund des vergleichsweise großen Volumens des hydrodynamischen Kreises träge erfolgt. Zudem gelangt frisches Druckmittel erst über den hydrodynamischen Kreis zu Reibflächen der Überbrückungskupplung, und ist bei bereits erfolgter Aufheizung nur noch bedingt für Kühlungszwecke geeignet.

Die gleichen Probleme stellen sich bei hydrodynamischen Kopplungsvorrichtungen ein, wie sie aus der DE 10 2007 058 014 A1 oder aus der DE 197 54 652 A1 bekannt sind. Auch bei diesen hydrodynamischen Kopplungsvorrichtungen findet jeweils Fluid aus einem hydrodynamischen Kreis Anwendung, um Überdruck an der entsprechenden Seite eines Kolbens einer Überbrückungskupplung zu erzeugen, und um Reibbereiche der jeweiligen Überbrückungskupplung zu kühlen. Auch hier wird jeweils der hydrodynamische Kreis durch Pumpenrad, Turbinenrad und Leitrad gebildet.

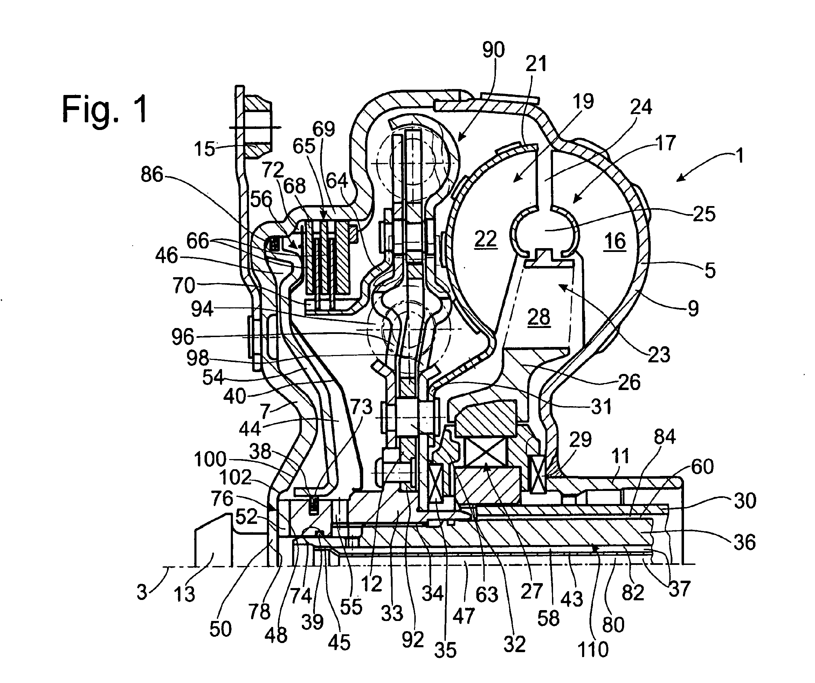

Bei einer aus der EP 1 977 141 B1 bekannten hydrodynamischen Kopplungsvorrichtung stützt sich, wie die Figuren 1 und 5 in Gesamtschau zeigen, eine Turbinennabe radial und axial an einer Nabe ab, die mit einem Torsionsschwingungsdämpfer in Wirkverbindung steht, und, wie Fig. 5 zeigt, an ihrer einer antriebsseitigen Gehäusewandung eines Kupplungsgehäuses zugewandten Seite über einen Axiallagerungsbereich verfügt, über welchen sie in Axialanlage an einer Axialanlagefläche gelangt, die an der antriebsseitigen Gehäusewandung befestigt und damit derselben zugeordnet ist.

Aus der DE 197 58 677 C2 ist eine hydrodynamische Kopplungsvorrichtung bekannt, die als hydrodynamischer Drehmomentwandler ausgebildet ist. Durch ein Pumpenrad wird im Zusammenwirken mit einem Turbinenrad und einem Leitrad ein hydrodynamischer Kreis in einem Kupplungsgehäuse gebildet, der mit einer Überbrückungskupplung zusammenwirkt. Die Überbrückungskupplung weist einen mit einer antriebsseitigen Gehäusewandung des Kupplungsgehäuses verbindbaren, in Achsrichtung zu einer Auslenkbewegung befähigten Kolben auf, der über eine Abdichtung auf einer an der antriebsseitigen Gehäusewandung befestigten Gehäusenabe zentriert ist. Diese als Bauteil des Kupplungsgehäuses wirksame Gehäusenabe dient als Axialanschlag für eine das Turbinenrad und eventuell auch ein Bauteil eines Torsionsschwingungsdämpfers aufnehmende Nabe, die hierfür an ihrer der Gehäusenabe zugewandten Seite mit einem Anschlagelement versehen ist, und sich mit ihrer axialen Gegenseite über eine Axiallagerung an dem als Bauteil des hydrodynamischen Kreises vorgesehenen Leitrad abstützt.

In der Gehäusenabe sind erste Strömungskanäle und in dem der Nabe zugeordneten Anschlagelement zweite Strömungskanäle vorgesehen. Die Strömungskanäle der Gehäusenabe stehen mit ersten Strömungsdurchlässen der Nabe in Strömungsverbindung, die Strömungskanäle des Abstandselementes dagegen mit zweiten Strömungsdurchlässen der Nabe, wobei die ersten Strömungsdurchlässe mit Axialversatz gegenüber den zweiten Strömungsdurchlässen vorgesehen sind. Über die ersten Strömungsdurchlässe wird wenigstens ein erster abtriebsseitiger Strömungsweg mit einem Druckraum, der zumindest im wesentlichen durch die antriebsseitige Gehäusewandung des Kupplungsgehäuse sowie den Kolben begrenzt ist, verbunden, und über die zweiten Strömungsdurchlässe zumindest ein zweiter abtriebsseitiger Strömungsweg mit einem Versorgungsraum, der an die vom Druckraum abgewandte Seite des Kolbens angrenzt.

Nachteilig bei der bekannten hydodynamischen Kopplungsvorrichtung ist der beträchtliche Aufwand, der sich durch die an der antriebsseitigen Gehäusewandung befestigte Gehäusenabe ergibt, da diese nicht nur in Achsrichtung so dimensioniert sein muss, dass sie die das Turbinenrad und/oder ein Bauteil des Torsionsschwingungsdämpfers aufnehmende Nabe axial gegenüber dem Leitrad positioniert, sondern darüber hinaus auch radial so bemessen sein muss, dass sie zum einen die Nabe zentriert, und zum anderen den Kolben der Überbrückungskupplung.

Außerdem muss dafür gesorgt sein, dass die Strömungskanäle der Gehäusenabe zumindest im wesentlichen mit den Strömungsdurchgängen der Nabe fluchten.

Der Erfindung liegt die Aufgabe zugrunde, eine ein Turbinenrad und/oder ein Bauteil eines Torsionsschwingungsdämpfers aufnehmende Nabe sowie einen Kolben einer Überbrückungskupplung innerhalb eines Kupplungsgehäuses einer hydrodynamischen Kopplungsvorrichtung bei geringstmöglichem Aufwand zu positionieren, und zwar im Hinblick auf die Nabe zumindest in Achsrichtung, im Hinblick auf den Kolben zumindest in Radialrichtung, und zudem eine umgehende Ansteuerbarkeit des Kolbens sowie eine bestmögliche Kühlbarkeit der Überbrückung in deren Reibbereich zu realisieren.

Diese Aufgabe wird erfindungsgemäß durch die im Anspruch 1 angegebenen Merkmale gelöst.

Bevor im Einzelnen auf die Ausbildung der Nabe eingegangen wird, soll deren Funktion in der hydrodynamischen Kopplungsvorrichtung präzisiert werden. Diese Nabe kann zur unmittelbaren Aufnahme des Turbinenrades und/oder eines Bauteils eines Torsionsschwingungsdämpfers dienen, oder aber zur mittelbaren Aufnahme des Turbinenrades, beispielsweise über ein Bauteil des Torsionsschwingungsdämpfers, oder aber zur mittelbaren Aufnahme eines Bauteils des Torsionsschwingungsdämpfers, beispielsweise über das Turbinenrad. Daher wird diese Nabe nachfolgend kurz als Trägernabe bezeichnet.

Bei Zuordnung eines Axialanlagerelementes zur antriebsseitigen Gehäusewandung, insbesondere zur Axialausnehmung derselben, wird, sofern dieses Axialanlagerelement mit einem großen Härtegrad ausgewählt ist, dafür gesorgt, dass kein Verschleiß an der Axialanlagefläche der antriebsseitigen Gehäusewandung auftritt, und damit die Trägernabe einem ungewollten Spiel in Achsrichtung unterworfen sein könnte. Mit besonderem Vorzug besteht das Axialanlagerelement aus einem Federstahl. Besonders günstig gestaltet sich eine derartige Lösung, wenn die Trägernabe aus einem Sinterwerkstoff hergestellt sein sollte, wobei ein Sinterverfahren bei der Herstellung der Trägernabe nicht nur bei einer relativ komplizierten Ausgestaltung derselben Vorteile bietet, sondern darüber hinaus der Trägernabe auch einen relativ großen Härtegrad verleiht, so dass der Trägernabe selbst im Erstreckungsbereich ihres der antriebsseitigen Gehäusewandung zugewandten Axiallagerungsbereichs kein wesentlicher Verschleiß droht.

Mit Vorzug ist ein Kolben einer Überbrückungskupplung auf der Trägernabe zentriert, und in Achsrichtung gegenüber der Trägernabe verlagerbar. Somit wird auch für den Kolben keine Gehäusenabe benötigt. Durch Zwischenfügung einer Abdichtung zwischen den Kolben und der Trägernabe ist dafür gesorgt, dass über die beiden in der Trägernabe vorgesehenen Strömungspassagen geflossene Strömung nicht von einem der beiden Räume - also Druckraum oder Versorgungsraum - in den jeweils anderen Raum gelangen kann, und damit nicht mehr für den eigentlichen Verwendungszweck verfügbar ist. Aus dem gleichen Grund greift der Abtrieb, mit Vorzug also eine Getriebeeingangswelle, über eine Abdichtung an der Trägernabe an.

Im folgenden wird ein Ausführungsbeispiel der Erfindung anhand von Zeichnungen näher erläutert. Es zeigt:
- Fig. 1: die obere Hälfte eines Längsschnittes durch ein Kupplungsgehäuse einer hydrodynamischen Kopplungsvorrichtung mit einer Nabe, die zur Aufnahme eines Torsionsschwingungsdämpfers, eines Turbinenrades über ein Bauteil des Torsionsschwingungsdämpfers sowie eines Kolbens einer Überbrückungskupplung dient,
- Fig. 2: eine Herauszeichnung der Nabe in Schnittdarstellung,

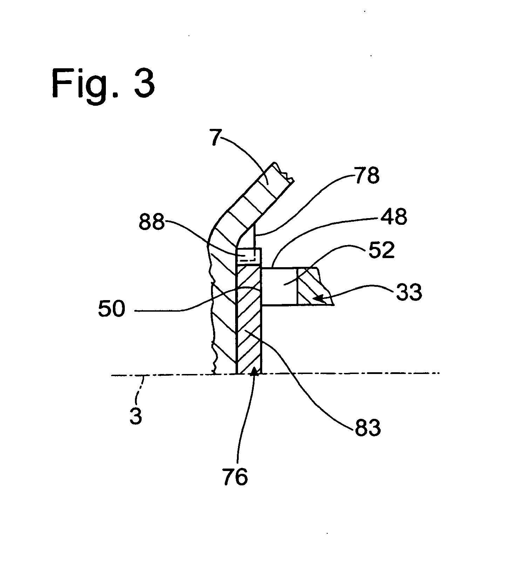

- Fig. 3: eine Herauszeichnung eines zur Axiallagerung der Nabe dienenden Abschnittes des Kupplungsgehäuses.

In Fig. 1 ist eine hydrodynamische Kopplungsvorrichtung 1 dargestellt, ausgebildet als hydrodynamischer Drehmomentwandler. Die hydrodynamische Kopplungsvorrichtung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium aus. Radial innerhalb der Hülse 43 verbleibt ein zentraler Versorgungskanal 47.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung eines Bauteils 12 eines Torsionsschwingungsdämpfers 90 dient, und dieses Bauteil 12 durch eine abtriebsseitige Nabenscheibe 92 des Torsionsschwingungsdämpfers 90 gebildet wird. Diese Nabenscheibe 92 wirkt über einen Umfangsfedersatz 94 mit zwei Deckblechen 96, 98 als weiteren Bauteilen des Torsionsschwingungsdämpfers 90 zusammen, wobei das Deckbleche 98 zur Aufnahme eines Turbinenradfußes 31 mittels einer Nietverbindung 63 dient, während das andere Deckblech 96 zur Befestigung eines Innenlamellenträgers 64 einer Kupplungsvorrichtung 65, die als Lamellenkupplung ausgebildet ist, vorgesehen ist. Die Kupplungsvorrichtung 65 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 über eine als Außenlamellenträger 69 wirksame Verzahnung 72 mit der antriebsseitigen Wandung 7 und damit mit dem Kupplungsgehäuse 5 in Drehverbindung stehen. Die Kupplungsvorrichtung 65 ist mittels eines axial verlagerbaren Kolbens 54 ein- oder ausrückbar, und bildet gemeinsam mit dem Kolben 54 eine Überbrückungskupplung 56 der hydrodynamischen Kopplungsvorrichtung 1. Wie Fig. 1 zeigt, kann zwischen dem Kolben 54 und dem Torsionsschwingungsdämpfer 90 eine Trennplatte 40 vorgesehen sein, die den hydrodynamsichen Kreis 24 von einem axial durch den Kolben 54 und die Trennplatte 40 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Axiallagerung 35 am Freilauf 27 ab, und kann sich andererseits mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

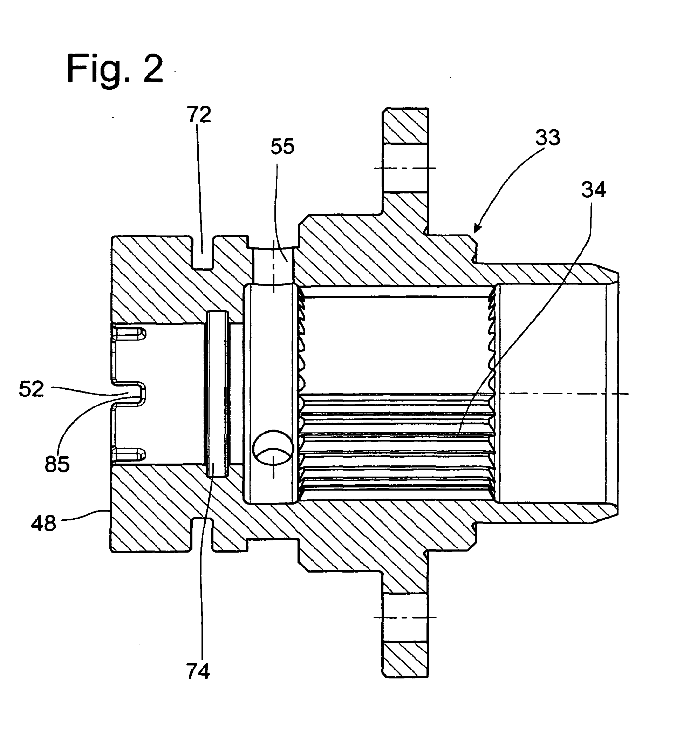

Nach radial innen hin ist die Trägernabe 33 über eine in einer Dichtungsausnehmung 74 (vgl. auch Fig. 2) aufgenommenen Abdichtung 39 gegenüber der Getriebeeingangswelle 36 abgedichtet, nach radial außen durch eine in einer Dichtungsausnehmung 73 aufgenommenen Abdichtung 38 gegenüber dem Kolben 54 der Überbrückungskupplung 56. Durch diese beiden Abdichtungen 38, 39 werden erste Strömungsdurchlässe 52, welche die Trägernabe 33 an ihrem Axiallagerungsbereich 48 durchdringen und mit Vorzug als Nutungen 85 (vgl. Fig. 2) im Axiallagerungsbereich 48 ausgebildet sind, von zweiten Strömungsdurchlässen 55, welche im axialen Erstreckungsbereich der Trägernabe 33 zwischen dem Kolben 54 und dem Torsionsschwingungsdämpfer 90 ausgebildet sind, getrennt. Die ersten Strömungsdurchlässe 52 stehen mit dem zentralen Versorgungskanal 47 der Hülse 47, die als erster abtriebsseitiger Strömungsweg 80 wirksam ist, in Strömungsverbindung, die zweiten Strömungsdurchlässe 55 dagegen mit dem ersten Versorgungskanal 58 radial zwischen der Hülse 43 und der dieselbe umschließenden Wand der Mittenbohrung 37 der Getriebeeingangswelle 36, wobei dieser Versorgungskanal 58 als zweiter abtriebsseitiger Strömungsweg 82 wirksam ist. Darüber hinaus ist ein zweiter Versorgungskanal 60 radial zwischen der Pumpenradnabe 11 und der Stützwelle 30 vorgesehen, der als dritter abtriebsseitiger Strömungsweg 84 dient.

Der erste abtriebsseitige Strömungsweg 80 dient, über die ersten Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken in Richtung zur Kupplungsvorrichtung 65, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des ersten abtriebsseitigen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden, und sind daher als inhaltlich in die jetzt vorliegende Patentanmeldung aufgenommen zu betrachten.

Der zweite abtriebsseitige Strömungsweg 82 dient, über die Verzahnung 34 und die zweiten Strömungsdurchlässe 55, mit dem Versorgungsraum 44 zur Herstellung eines Überdruckes in demselben gegenüber dem Druckraum 46, und damit zur Druckbeaufschlagung des Kolbens 54 der Überbrückungskupplung 56 zum Ausrücken in von der Kupplungsvorrichtung 65 fortweisender Richtung, wodurch die Reibverbindung zwischen den einzelnen Kupplungselementen 66, 68 der Kupplungsvorrichtung 65 gelöst wird. Zur Herstellung dieses Überdruckes im Versorgungsraum 44 gegenüber dem Druckraum 46 ist eine Verbindung des zweiten abtriebsseitigen Strömungsweges 82 mit der bereits erwähnten Steuervorrichtung und dem ebenfalls genannten Hydraulikflüssigkeitsvorrat erforderlich.

Fluidförmiges Medium, das über den zweiten abtriebsseitigen Strömungsweg 82 sowie die zweiten Strömungsdurchlässe 55 in den Versorgungsraum 44 gelangt ist, tritt, nach Kühlung der Kupplungselemente 66, 68 der Kupplungsvorrichtung 75, in den hydrodynamischen Kreis 24, um von dort aus über den dritten abtriebsseitiger Strömungsweg 84 wieder auszutreten.

Zurückkommend auf die antriebsseitige Gehäusewandung 7 des Kupplungsgehäuses 5, ist bei dieser die als Axiallagerung 76 wirksame Axialanlagefläche 50 im radialen Erstreckungsbereich einer Axialausnehmung 78 vorgesehen, die mittels eines Bogenverlaufs 102 in den radial benachbarten Bereich 100 der antriebsseitigen Gehäusewandung 7 übergeht. Die Axialausnehmung 78 ist hierbei radial größer als die Radialerstreckung des Axiallagerungsbereichs 48 der Trägernabe 33, so dass selbst ungünstige Radialtoleranzen bei der Positionierung der Getriebeeingangswelle 36 und/oder der Trägernabe 33 bezüglich der Axiallagerung der Trägernabe 33 problemfrei verkraftet werden können.

Die Trägernabe 33 ist mit Vorzug mittels eines Sinterverfahrens hergestellt und besteht daher aus einem Sintermetall. Auf diese Weise ist nicht nur eine aufwändigere Geometrie der Trägernabe 33 problemlos herstellbar, sondern darüber hinaus weist die Trägernabe 33 auch eine vergleichsweise hohe Festigkeit auf, die sich insbesondere an dem einer Relativbewegung gegenüber der antriebsseitigen Gehäusewandung 7 unterworfenen Axiallagerungsbereich 48 der Trägernabe 33 durch geringen Verschleiß vorteilhaft bemerkbar macht. Um auch an der antriebsseitigen Gehäusewandung 7 erhöhten Verschleiß zu vermeiden, kann es sinnvoll sein, in die Axialausnehmung 78 ein Axialanlagerelement 83 einzubringen, das bevorzugt aus einem Werkstoff großer Härte, wie beispielsweise einem Federstahl, besteht,um dieses Axialanlagerelement 83 als Axiallagerung 76 für den Axiallagerungsbereich 48 der Trägernabe 33 zu verwenden. Dieses Axialanlagerelement 83 weist hierzu an seiner dem Axiallagerungsbereich 48 der Trägernabe 33 zugewandten Seite die benötigte Axialanlagefläche 50 auf. Das Axialanlagerelement 83 kann drehgesichert an der antriebsseitigen Gehäusewandung 7 aufgenommen sein, beispielsweise mittels einer Verzahnung 88.

Alternativ kann die antriebsseitige Gehäusewandung 7 im radialen Erstreckungsbereich der Axialausnehmung 78 über eine Anprägung verfügen, um auf diese Weise eine Axialanlagefläche 50 für den Axiallagerungsbereich 48 der Trägernabe 33 mit hoher Oberflächengüte zu schaffen, und damit verschleißfördernde Reibungseffekte zu minimieren.

### Bezugszeichenliste

- 1.: hydrodyn. Kopplungsvorrichtung
- 3.: Drehachse
- 5.: Kupplungsgehäuse
- 7.: antriebsseitige Gehäusewandung
- 9.: Pumpenradschale
- 11.: Pumpenradnabe
- 12.: Bauteil eines TD
- 13.: Lagerzapfen
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: Axiallagerung
- 30.: Stützwelle
- 31.: Turbinenradfuss
- 32: Verzahnung
- 33.: Nabe
- 34: Verzahnung
- 35.: Axiallagerung
- 36.: Getriebeeingangswelle
- 37.: Mittenbohrung
- 38.: Abdichtung
- 39.: Abdichtung
- 42.: Trennplatte
- 43.: Hülse
- 44.: Versorgungsraum
- 45.: Abstützbereiche
- 46.: Druckraum
- 47.: Versorgungskanal
- 48.: Axiallagerungsbereich der Nabe
- 50.: Axialanlagefläche
- 52.: erste Strömungsdurchlässe
- 54.: Kolben
- 55.: zweite Strömungsdurchlässe
- 56.: Überbrückungskupplung
- 58.: erster Versorgungskanal
- 60.: zweiter Versorgungskanal
- 63: Nietverbindung
- 64.: Innenlamellenträger
- 65.: Kupplungsvorrichtung
- 66.: innere Kupplungselemente
- 68.: äußere Kupplungselemente
- 69.: Außenlamellenträger
- 70.: Verzahnung
- 72.: Verzahnung
- 73.: Dichtungsausnehmung
- 80.: erster abtriebsseit. Strömungsweg
- 82.: zweiter abtriebseit. Strömungsweg
- 83.: Axialanlagerelement
- 84.: dritter abtriebseit. Strömungsweg
- 85.: Nutungen
- 86.: Abdichtung
- 88.: Verzahnung
- 90.: Torsionsschwingungsdämpfer
- 92.: abtriebsseitige Nabenscheibe
- 94.: Umfangsfedersatz
- 96.: Deckblech
- 98.: Deckblech
- 100.: radial benachbarter Bereich
- 102.: Bogenverlauf
- 110.: Abtrieb
- 74.: Dichtungsausnehmung
- 76: Axiallagerung
- 78.: Axialausnehmung

## Patentansprüche

1. Hydrodynamische Kopplungsvorrichtung (1) mit einem zumindest durch ein Pumpenrad (17) und ein Turbinenrad (19) gebildeten hydrodynamischen Kreis (24) in einem Kupplungsgehäuse (5) und mit einer Überbrückungskupplung (56), die einen mit einer antriebsseitigen Gehäusewandung (7) des Kupplungsgehäuses (5) verbindbaren, in Achsrichtung zu einer Auslenkbewegung befähigten Kolben (54) aufweist, wobei das Turbinenrad (19) zumindest in Achsrichtung mit einer Nabe (33) in Wirkverbindung steht, die mit einem Abtrieb (110) in Drehverbindung steht, zur Befestigung eines Bauteils (12) eines Torsionsschwingungsdämpfers (90) dient, sich einerseits an einem Bauteil (23) des hydrodynamischen Kreises (24) und andererseits an einem Bauteil des Kupplungsgehäuses (5) axial abstützt und über erste Strömungsdurchlässe (52) sowie, mit Axialversatz gegenüber denselben, über zweite Strömungsdurchlässe (55) jeweils zur Passage von Strömungsfluid verfügt, von denen die ersten Strömungsdurchlässe (52) wenigstens einen ersten abtriebsseitigen Strömungsweg (80) mit einem Druckraum (46), der zumindest im wesentlichen durch die antriebsseitige Gehäusewandung (7) des Kupplungsgehäuses (5) sowie den Kolben (54) begrenzt ist, verbinden, während die zweiten Strömungsdurchlässe (55) zumindest einen zweiten abtriebsseitigen Strömungsweg (82) mit einem Versorgungsraum (44) verbinden, der an die vom Druckraum (46) abgewandte Seite des Kolbens (54) angrenzt, wobei die antriebsseitige Gehäusewandung (7) zur Bildung einer Axialabstützung für die Nabe (33) zumindest im wesentlichen bis an eine Drehachse (3) des Kupplungsgehäuses (5) nach radial innen gezogen ist, und die Nabe (33) mit ihrem der antriebsseitigen Gehäusewandung (7) zugewandten, als Axiallagerungsbereich (48) ausgebildeten antriebsseitigen Ende in Axialanlage mit einer Axiallagerung (76) versetzbar ist, die entweder als Axialanlagefläche (50) an der antriebsseitigen Gehäusewandung (7) vorgesehen ist, oder aber der antriebsseitigen Gehäusewandung (7) zugeordnet ist, wobei die Axialanlagefläche (50) in einer Axialausnehmung (78) der antriebsseitigen Gehäusewandung (7) vorgesehen ist,
**dadurch gekennzeichnet,**
**dass** die Nabe (33) mittels eines Sinterverfahrens hergestellt ist, und somit aus einem Sinterwerkstoff besteht, zur unmittelbaren Aufnahme des Kolbens (54) der Überbrückungskupplung dient und eine gegenüber dem Kolben (54) wirksame Abdichtung (38) aufweist, sowie mit einer mit einer gegenüber dem Abtrieb (110) wirksamen Abdichtung (39) ausgebildet ist, und dass zwischen dem Kolben (54) und dem Torsionsschwingungsdämpfer (90) eine Trennplatte (40) vorgesehen ist, die den hydrodynamischen Kreis (24) von dem Versorgungsraum (44) isoliert, wobei der Versorgungsiaum (44) von dem Kolben (54) und Trennplatte (40) axial begrenzt ist.

2. Hydrodynamische Kopplungsvorrichtung nach Anspruch 1,
**dadurch gekennzeichnet,**
**dass** die Axialausnehmung (78) zur Aufnahme eines Axialanlagerelementes (83) dient, das aus einem Federstahl besteht.

3. Hydrodynamische Kopplungsvorrichtung nach Anspruch 1,
**dadurch gekennzeichnet,**
**dass** die Axialanlagefläche (50) in ihrem Übergangsbereich zur radial benachbarten antriebsseitigen Gehäusewandung (7) über eine Anprägung verfügt, an welcher die Nabe (33) mit ihrem Axiallagerungsbereich (48) in Axialanlage gelangt.

## Claims

1. Hydrodynamic coupling device (1), with a hydrodynamic circuit (24), formed at least by a pump wheel (17) and a turbine wheel (19), in a clutch housing (5), and with a lock-up clutch (56) which has a piston (54) connectable to a drive-side housing wall (7) of the clutch housing (5) and capable of a deflecting movement in the axial direction, the turbine wheel (19) being operatively connected at least in the axial direction to a hub (33) which is connected rotationally to an output (110), for fastening a component (12) of a torsional vibration damper (90), is supported axially, on the one hand, on a component (23) of the hydrodynamic circuit (24) and, on the other hand, on a component of the clutch housing (5), and has first flow passages (52) and, offset axially with respect to these, second flow passages (55), in each case for the passage of flow fluid, of which the first flow passages (52) connect at least one first output-side flow path (80) to a pressure space (46) which is delimited at least essentially by the drive-side housing wall (7) of the clutch housing (5) and by the piston (54), while the second flow passages (55) connect at least one second output-side flow path (82) to a supply space (44) which is adjacent to that side of the piston (54) which faces away from the pressure space (46), the drive-side housing wall (7) being drawn radially inwards at least essentially as far as an axis of rotation (3) of the clutch housing (5) in order to form an axial support for the hub (33), and the hub (33) being displaceable, with its drive-side end facing the drive-side housing wall (7) and designed as an axial mounting region (48), into axial bearing contact with an axial mounting (76) which either is provided as an axial bearing surface (50) on the drive-side housing wall (7) or else is assigned to the drive-side housing wall (7), the axial bearing surface (50) being provided in an axial recess (78) of the drive-side housing wall (7), **characterized in that** the hub (33) is produced by means of a sintering method and therefore consists of a sintered material, serves for the direct reception of the piston (54) of the lock-up clutch and has a seal (38) active with respect to the piston (54), and also is designed with a seal (39) active with respect to the output (110), and **in that**, between the piston (54) and the torsional vibration damper (90), a separating plate (40) is provided which isolates the hydrodynamic circuit (24) from the supply space (44), the supply space (44) being delimited axially by the piston (54) and the separating plate (40).

2. Hydrodynamic coupling device according to Claim 1, **characterized in that** the axial recess (78) serves for receiving an axial bearing element (83) which consists of a spring steel.

3. Hydrodynamic coupling device according to Claim 1, **characterized in that** the axial bearing surface (50) has, in its region of transition to the radially adjacent drive-side housing wall (7), an embossed portion, against which the hub (33) comes into axial bearing contact with its axial mounting region (48).

## Revendications

1. Dispositif d'accouplement hydrodynamique (1) comprenant un circuit hydrodynamique (24) formé au moins par une roue de pompe (17) et une roue de turbine (19) dans un boîtier d'embrayage (5) et un embrayage de pontage (56), qui présente un piston (54) pouvant être connecté à une paroi de boîtier (7), du côté de l'entraînement, du boîtier d'embrayage (5), capable d'effectuer un mouvement de déviation dans la direction axiale, la roue de turbine (19) étant en liaison fonctionnelle au moins dans la direction axiale avec un moyeu (33), qui est en liaison rotative avec une prise de force (110), qui sert à la fixation d'un composant (12) d'un amortisseur d'oscillations de torsion (90), qui s'appuie axialement d'une part sur un composant (23) du circuit hydrodynamique (24) et d'autre part sur un composant du boîtier d'embrayage (5), et qui dispose de premiers passages d'écoulement (52) ainsi que de deuxièmes passages d'écoulement (55) décalés axialement par rapport aux premiers, à chaque fois pour le passage de fluide d'écoulement, dont les premiers passages d'écoulement (52) relient au moins une première voie d'écoulement (80) du côté de la prise de force à un espace de pression (46), qui est limité au moins essentiellement par la paroi de boîtier (7), du côté de l'entraînement, du boîtier d'embrayage (5) ainsi que par le piston (54), tandis que les deuxièmes passages d'écoulement (55) relient au moins une deuxième voie d'écoulement (82) du côté de la prise de force à un espace d'alimentation (44), qui est adjacent au côté du piston (54) opposé à l'espace de pression (46), la paroi de boîtier (7), du côté de l'entraînement, étant rentrée radialement vers l'intérieur pour former un support axial pour le moyeu (33) au moins essentiellement jusqu'à un axe de rotation (3) du boîtier d'embrayage (5), et le moyeu (33) pouvant être amené en appui axial avec un support sur palier axial (76) par son extrémité du côté de l'entraînement réalisée sous forme de région de support sur palier axial (48), tournée vers la paroi de boîtier (7) du côté de l'entraînement, lequel support sur palier axial est prévu soit sous forme de surface d'appui axiale (50) contre la paroi de boîtier (7) du côté de l'entraînement, soit toutefois, est associé à la paroi de boîtier (7) du côté de l'entraînement, la surface d'appui axiale (50) étant prévue dans un évidement axial (78) de la paroi de boîtier (7) du côté de l'entraînement,
**caractérisé en ce que**
le moyeu (33) est fabriqué au moyen d'un procédé de frittage et se compose donc d'un matériau fritté, sert à recevoir directement le piston (54) de l'embrayage de pontage et présente un joint d'étanchéité (38) agissant vis-à-vis du piston (54), et est réalisé avec un joint d'étanchéité (39) agissant vis-à-vis de la prise de force (110), et **en ce qu'**entre le piston (54) et l'amortisseur d'oscillations de torsion (90) est prévue une plaque de séparation (40) qui isole le circuit hydrodynamique (24) de l'espace d'alimentation (44), l'espace d'alimentation (44) étant limité axialement par le piston (54) et la plaque de séparation (40).

2. Dispositif d'accouplement hydrodynamique selon la revendication 1,
**caractérisé en ce que**
l'évidement axial (78) sert à recevoir un élément de palier axial (83) qui se compose d'un acier à ressort.

3. Dispositif d'accouplement hydrodynamique selon la revendication 1,
**caractérisé en ce que**
la surface d'appui axiale (50) dispose, dans sa région de transition à la paroi de boîtier (7) adjacente, du côté de l'entraînement, d'un marquage sur lequel le moyeu (33) parvient en appui axial avec sa région de support sur palier axial (48).
